# EUROPEAN PATENT SPECIFICATION

(11) **EP 2 071 390 B1**
(45) Date of publication and mention of the grant of the patent: **01.12.2010**
(21) Application number: 07791179.0
(22) Date of filing: 23.07.2007
(51) Int. Cl.: G02F 1/1335

(54) **LIQUID CRYSTAL DISPLAY DEVICE COMPRISING A MICROLENS ARRAY AND METHOD FOR MANUFACTURING THE SAME.**
FLÜSSIGKRISTALLANZEIGEGERÄT MIT MIKROLINSENARRAY UND VERFAHREN ZU SEINER HERSTELLUNG.
DISPOSITIF D'AFFICHAGE À CRISTAUX LIQUIDES COMPRENANT UN RÉSEAU DE MICROLENTILLES ET MÉTHODE POUR SA FABRICATION.

(30) Priority: 27.09.2006 JP 2006262368
(43) Date of publication of application: 17.06.2009
(73) Proprietor: Sharp Kabushiki Kaisha, Osaka-shi, Osaka 545-8522 (JP)
(72) Inventor: MURAO, Takehiro, Taki-gun, Mie 519-2157 (JP); KOSEGAWA, Seishi, Matsusaka-shi, Mie 515-0062 (JP); USUKURA, Naru, Matsusaka-shi, Mie 515-0005 (JP)
(74) Representative: Müller - Hoffmann & Partner
(86) International application number: PCT/JP2007/064447
(87) International publication number: WO 2008/038453

(56) References cited:
- EP-A- 0 645 661
- JP-A- 11 231 314
- JP-A- 2005 208 553
- JP-A- 2006 098 525
- JP-A- 2008 242 307
- US-A- 5 508 834

## Description

### TECHNICAL FIELD

The present invention relates to a liquid crystal display panel and a liquid crystal display device, and more particularly to a liquid crystal display panel and a liquid crystal display device which include a microlens array.

### BACKGROUND ART

In recent years, liquid crystal display devices are widely used as display devices for monitors, projectors, mobile information terminals, mobile phones, and the like. Generally speaking, a liquid crystal display device allows the transmittance (or reflectance) of a liquid crystal display panel to vary with a driving signal, thus modulating the intensity of light from a light source for irradiating the liquid crystal display panel, whereby images and text characters are displayed. Liquid crystal display devices include direct-viewing type display devices in which images or the like that are displayed on the liquid crystal display panel are directly viewed, projection-type display devices (projectors) in which images or the like that are displayed on the display panel are projected onto a screen through a projection lens in an enlarged size, and so on.

By applying a driving voltage which corresponds to an image signal to each of the pixels that are in a regular matrix arrangement, a liquid crystal display device causes a change in the optical characteristics of a liquid crystal layer in each pixel, and regulates the transmitted light in accordance with the optical characteristics of the liquid crystal layer with polarizers (which typically are polarizing plates) being disposed at the front and rear thereof, thereby displaying images, text characters, and the like. In the case of a direct-viewing type liquid crystal display device, usually, these polarizing plates are directly attached to the light-entering substrate (the rear substrate) and the light-outgoing substrate (the front substrate or viewer-side substrate) of the liquid crystal display panel.

Methods for applying an independent driving voltage for each pixel include a passive matrix type and an active matrix type. Among these, on a liquid crystal display panel of the active matrix type, switching elements and wiring lines for supplying driving voltages to the pixel electrodes need to be provided. As switching elements, non-linear 2-terminal devices such as MIM (metal-insulator-metal) devices and 3-terminal devices such as TFT (thin film transistor) devices are in use.

On the other hand, in a liquid crystal display device of the active matrix type, when strong light enters a switching element (in particular a TFT) which is provided on the display panel, its element resistance in an OFF state is decreased, thereby allowing the electric charge which was charged to the pixel capacitor under an applied voltage to be discharged, such that a predetermined displaying state cannot be obtained. Thus, there is a problem of light leakage even in a black state, thus resulting in a decreased contrast ratio.

Therefore, in a liquid crystal display panel of the active matrix type, in order to prevent light from entering the TFTs (in particular channel regions), a light shielding layer (called a black matrix) is provided on a TFT substrate on which the TFTs and the pixel electrodes are provided, or on a counter substrate that opposes the TFT substrate via the liquid crystal layer, for example.

Now, in the case where the liquid crystal display device is a reflection-type liquid crystal display device, decrease in the effective pixel area can be prevented by utilizing reflection electrodes as a light shielding layer. However, in a liquid crystal display device which performs displaying by utilizing transmitted light, providing a light shielding layer in addition to the TFTs, gate bus lines, and source bus lines, which do not transmit light, will allow the effective pixel area to be decreased, thus resulting in a decrease in the ratio of the effective pixel area to the total area of the displaying region, i.e., the aperture ratio.

Liquid crystal display devices are characterized by their light weight, thinness, and low power consumption, and therefore are widely used as display devices of mobile devices such as mobile phones and mobile information terminals. With a view to increasing the amount of displayed information, improving the image quality, and so on, there are stronger and stronger desires for display devices to have higher resolutions. Conventionally, it has been a standard to adopt QVGA displaying by 240 × 320 pixels for liquid crystal display devices of the 2 to 3-inch class, for example, but devices which perform VGA displaying by 480 × 640 pixels have also been produced in the recent years.

As liquid crystal display panels become higher in resolution and smaller in size, the aforementioned decrease in their aperture ratio presents a greater problem. The reason is that, even if there is a desire to reduce the pixel pitch, constraints such as electrical performance and fabrication techniques make it impossible for the TFTs, the bus lines, etc., to become smaller than certain sizes. It might be possible to enhance the brightness of the backlight in order to compensate for the decreased transmittance, but this will induce an increased power consumption, thus presenting a particular problem to mobile devices.

In recent years, as display devices of mobile devices, transflective-type liquid crystal display devices have become prevalent, which perform displaying under dark lighting by utilizing light from a backlight, and which perform displaying under bright lighting by reflecting light entering the display surface of the liquid crystal display panel. In a transflective-type liquid crystal display device, a region (reflection region) which performs displaying in the reflection mode and a region (transmission region) which performs displaying in the transmission mode are included in each pixel. Therefore, reducing the pixel pitch significantly will lower the ratio of the area of the transmission region to the total area of the displaying region (aperture ratio of the transmission region). Thus, although transflective-type liquid crystal display devices have the advantage of realizing displaying with a high contrast ratio irrespective of the ambient brightness, they have a problem in that their brightness is lowered as the aperture ratio of the transmission region becomes smaller.

As a method for improving the efficiency of light utility of such a liquid crystal display device including transmission regions, Patent Document 1, Patent Document 2, and Patent Document 3 disclose a method of providing a microlens array for converging light in each pixel on the liquid crystal display panel in order to improve the effective aperture ratio of the liquid crystal display panel. Furthermore, the applicant discloses in Patent Document 4 a production method for a liquid crystal display panel with a microlens array, which is suitably used for transmission-type or transflective-type liquid crystal display devices and the like. According to the production method described in Patent Document 4, microlenses can be formed within a pixel in a self-aligning manner, with a high positional precision.
[Patent Document 1] Japanese Laid-Open Patent Publication No. 2000-329906
[Patent Document 2] Japanese Laid-Open Patent Publication No. 2005-195733
[Patent Document 3] Japanese Laid-Open Patent Publication No. 2005-208553
[Patent Document 4] Japanese Laid-Open Patent Publication No. 2005-196139

JP 2006-098525 A describes a liquid crystal display device comprising a liquid crystal display panel, a microlens array provided on a face of the liquid crystal display panel, a support formed on the same face of the liquid crystal display panel so as to surround the microlens array and an optical film attached to the liquid crystal display panel via the support. The microlens array is formed with ultraviolet curing resin, and a manufacturing method capable of suppressing the decoloration of the resin is disclosed.

In US 5,508,834, a liquid crystal display device is described, wherein a gap is provided between a liquid crystal panel and an optical film provided on a support member in order to prevent a deterioration of the image quality due to foreign matter attached to the optical film.

EP 0 645 661 A1 also descibes a liquid crystal display device, wherein a gap is provided between a microlens array provided on a liquid crystal display panel and an optical film in order to avoid that the thermal contraction and expansion of the polarizers will affect the registration between the pixels in the liquid crystal display and the microlenses.

### DISCLOSURE OF INVENTION

### PROBLEMS TO BE SOLVED BY THE INVENTION

In a liquid crystal display device having a microlens array, an optical film such as a polarizing plate is attached on the convex surfaces of the microlenses. There has been a problem in that, when the optical film is attached only via the microlenses, the optical film will only be in contact with the neighborhoods of the apices of the convex surfaces, so that the contact area between the optical film and the microlenses will be small, thus rendering the optical film easy to peel. As another problem, the fact that the ends of the optical film are not in contact with the microlens, but are free, renders the optical film even easier to peel.

As an idea for solving this problem, as described in Patent Document 1, it may be conceivable to entirely bury the gaps between the microlens array and the optical film with an adhesive. In this case, in order to obtain significant convergence characteristics with the microlenses, it is necessary to employ a material with a refractive index which is lower than that of the material of the microlenses as an adhesive. However, it has been found that, as such low-refractive index materials, only those materials whose refractive index is about 1.40 exist in actuality.

As the material of microlenses, a resin having a refractive index of about 1.60 is usually used. Therefore, when a material whose refractive index is about 1.40 is disposed between the microlenses and the cover glass, the refractive index difference between them will be only about 0.20, so that not such great convergence characteristics can be obtained. Therefore, although a material whose refractive index is about 1.40 may be applicable to a liquid crystal display device which allows microlenses with a relatively long focal length to be used, e.g., a projection-type liquid crystal display device, it is difficult to be used for a thin direct-viewing type liquid crystal display device which requires microlenses with a short focal length, because a sufficient convergence ability will not be obtained.

On the other hand, in the liquid crystal display devices described in Patent Documents 2 and 3, protrusions (terraces) which are at the same height as or higher than the microlenses is provided in the neighborhood of the microlens array, and the optical film is attached to these protrusions by using an adhesive. The gap between the periphery (the region other than the apex portion) of each microlens and the optical film is filled with air. Based on this construction, a relatively large convergence effect is obtained in the periphery of each microlens; the attachment strength of the optical film is improved; and the optical film becomes difficult to peel.

However, it has been found that adopting this construction will result in the following problems.

Usually, attachment of the optical film is performed through autoclaving by using a pressurizing apparatus. In autoclaving, the optical film is attached at a high temperature and under a high pressure, which realizes strong adhesion in a short period of time. Moreover, autoclaving will remove the voids which are contained in the adhesive or the like, thereby enabling a stronger adhesion.

However, according to a study by the inventors, it has been found that, since a liquid crystal display device of the aforementioned construction includes gaps (sealed air layers) which are sealed by the microlenses, the optical film, and the protrusions, a temperature difference and a pressure difference occur between the gaps and the exterior of the device when autoclaving is performed, thus causing deformation and peeling of the optical film. Such deformation and peeling not only deteriorate the adhesion strength of the optical film, but also may cause display unevenness. Another problem has been found that, since temperature and pressure are difficult to be propagated to the inside of the device, the voids contained in the adhesive will not be sufficiently removed and the adhesion strength will not be enhanced.

In order to solve this problem, air holes for interconnecting the gaps and the external space may be provided in the liquid crystal display device. However, according to a study by the inventors, it has been found that merely providing air holes so as to extend perpendicularly to the inner face of the protrusions will deteriorate the adhesion strength between the optical film and the protrusions in the neighborhood of the air holes, so that the deformation and peeling problems will not be completely solved. Moreover, through such air holes, temperature and humidity of the external air will be easily propagated to the displaying region during use of the liquid crystal display device, so that condensation will occur in the displaying region to cause display unevenness. Furthermore, depending on the shape of the air holes, foreign matter may be mixed into the displaying region through the air holes, which may also cause display unevenness.

The present invention has been made in view of the aforementioned problems, and an objective thereof is to provide a liquid crystal display panel with microlenses in which deformation, peeling, and the like of an optical film are not likely to occur and which has a good displaying quality, as well as a liquid crystal display device incorporating the same.

### MEANS FOR SOLVING THE PROBLEMS

The above objects are solved by the claimed matter according to the independent claims.

A liquid crystal display panel with a microlens array according to the present invention comprises: a liquid crystal display panel having a plurality of pixels; a microlens array provided on a light-incident side of the liquid crystal display panel; a support provided on the light-incident side of the liquid crystal display panel so as to surround the microlens array; and an optical film attached to the liquid crystal display panel via the support, wherein, a gap is formed between the microlens array and the optical film; at least one vent hole connecting a space outside the support and the gap is provided in the support; and the vent hole extends in a bending manner or extends in an oblique direction with respect to an inner face or an outer face of the support.

In one embodiment, a shape of the vent hole as seen from a direction perpendicular to the plane of the liquid crystal display panel is a crank shape or an S-shape.

In one embodiment, a cross-sectional width of the vent hole in a plane which is perpendicular to a direction that the vent hole extends is no less than 25 µm and no more than 500 µm.

In one embodiment, the support includes a first portion formed so as to surround the microlens array and a second portion provided so as to surround the first portion; and a gap which is in communication with the vent hole is formed between the first portion and the second portion.

In one embodiment, a plurality of vent holes are formed in different positions of the support.

In one embodiment, the plurality of vent holes are formed in different positions of the support at an equal interval.

In one embodiment, the plurality of vent holes are formed in different positions of the support with an interval of 1 mm or more.

In one embodiment, the support is formed at a predetermined distance from an end of the microlens array. In one embodiment, the predetermined distance is 200 µm or less. In one embodiment, the predetermined distance is no less than 50 µm and no more than 100 µm.

A liquid crystal display device according to the present invention is a liquid crystal display device having the aforementioned liquid crystal display panel with a microlens array.

A production method for a liquid crystal display panel with a microlens array according to the present invention is a production method for a liquid crystal display panel with a microlens array, the liquid crystal display panel having a liquid crystal display panel, a microlens array provided on a light-incident side of the liquid crystal display panel, and an optical film provided on a light-incident side of the microlens array, with a gap between the microlens array and the optical film, comprising: (a) a step of forming a resin layer on a face of the liquid crystal display panel; (b) a step of processing the resin layer to form a microlens array; (c) a step of processing the resin layer to form a support so as to surround the microlens array; and (d) a step of attaching an optical film to the support, wherein, in step (c), at least one vent hole connecting a space inside the support and a space outside the support is formed in the support, so as to extend in a bending manner or extend in an oblique direction with respect to an inner face of the support.

In one embodiment, the vent hole is formed in a crank shape or an S-shape as seen from a direction which is perpendicular to the plane of the liquid crystal display panel.

In one embodiment, step (c) comprises a step of forming a first portion of the support so as to surround the microlens array and a step of forming a second portion of the support so as to surround the first portion, with a gap in communication with the vent hole being formed between the first portion and the second portion.

In one embodiment, in step (c), a plurality of vent holes are formed in different positions of the support. In one embodiment, in step (c), a plurality of vent holes are formed in different positions of the support at an equal interval.

### EFFECTS OF THE INVENTION

According to the present invention, in a liquid crystal display device in which a gap is formed between a microlens array and an optical film, a vent hole is formed in the support. Therefore, distortion, warp, deformation, peeling, and the like of the optical film, which might occur during the production process of the liquid crystal display device, are prevented. Furthermore, the vent hole extends in a bending manner, or extends in an oblique direction with respect to the inner face or the outer face of the support. Therefore, portions with weak attachment strength will not localize in any portion of the support, whereby distortion, warp, deformation, peeling, and the like of the optical film can be more effectively prevented. Moreover, air will not abruptly flow in through the vent hole, so that condensation and mixing of foreign matter, which might occur during the production or use of the liquid crystal display device, can also be prevented, thereby preventing occurrence of display unevenness.

Thus, there is provided a liquid crystal display panel with microlenses as well as a liquid crystal display device having a high strength, a high efficiency of light utility, and a high displaying quality across the entire display surface. Moreover, according to the present invention, such a liquid crystal display panel and liquid crystal display device can be produced efficiently.

### BRIEF DESCRIPTION OF DRAWINGS

[FIG. **1****] (a)** is a plan view schematically showing the construction of a liquid crystal display panel with a microlens array according to an embodiment of the present invention; and **(b)** is a cross-sectional view thereof.
[FIG. **2****]** A diagram, used for reference sake, for explaining an appropriate size of a peripheral region in the present embodiment.
[FIG. **3****] (a)** to **(c)** are diagrams showing variants of vent holes according to the present embodiment.
[FIG. **4****]** A diagram showing a variant of the liquid crystal display panel with a microlens array according to the present embodiment.
[FIG. **5****] (a)** to **(e)** are cross-sectional views schematically showing a former portion of a production method according to the present embodiment.
[FIG. **6****] (a)** and **(b)** are cross-sectional views schematically showing a latter portion of a production method according to the present embodiment.
[FIG. **7****] (a)** to **(e)** are diagrams exemplifying microlens shapes that can be formed with a production method according to the present embodiment.
[FIG. **8**] A cross-sectional view schematically showing a liquid crystal display device having a liquid crystal display panel with a microlens array according to the present invention.

### DESCRIPTION OF REFERENCE NUMERALS

- **10**: displaying region
- **12**: liquid crystal display panel
- **14**: microlens array
- **14a**: microlens
- **14a'**: latent image of microlens **14a**
- **15**: gap
- **15'**: gap
- **16**: vent hole
- **16'**: latent image of vent hole **16**
- **17**: pixel aperture
- **20**: auxiliary hole
- **22**: front-face side optical film
- **23**: rear-face side optical film
- **24**: adhesion layer
- **26**: support
- **26'**: latent image of support **26**
- **30**: electrical element substrate
- **32**: counter substrate
- **34**: liquid crystal layer
- **35**: peripheral region
- **36**: sealant
- **37**: adhesion layer
- **39.**: resin layer
- **40**: photomask
- **41**: backlight
- **42**: light source
- **43**: light guide plate
- **44**: reflector
- **100A, 100B, 100C**: liquid crystal display panel with a microlens array
- **200**: liquid crystal display device

### BEST MODE FOR CARRYING OUT THE INVENTION

Hereinafter, with reference to the drawings, the structure of a liquid crystal display panel with a microlens array according to an embodiment of the present invention will be described.

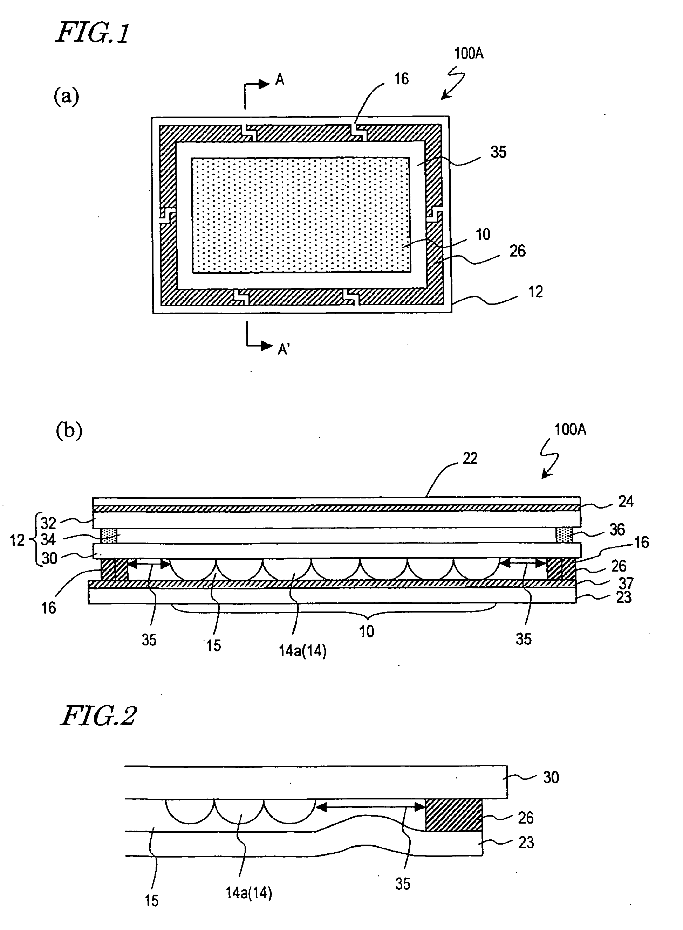

FIG. **1** is a diagram schematically the construction of a liquid crystal display panel **100A** with a microlens array according to the present embodiment (which hereinafter may be simply referred to as the liquid crystal display panel **100A**). FIG. **1(a)** shows a plan view of the liquid crystal display panel **100A;** and FIG. **1(b)** shows the construction of the liquid crystal display panel **100A** along the **A-A'** cross section in FIG. **1(a)****.**

As shown in the figure, the liquid crystal display panel **100A** of the present embodiment includes a liquid crystal display panel (also referred to as a "liquid crystal cell") **12** having a plurality of pixels in a matrix arrangement, a microlens array **14** which is provided on the light-incident side (the lower side in FIG. **1(b)****)** of the liquid crystal display panel **12** and which includes a plurality of microlenses **14a,** a support **26** provided in a peripheral region of the microlens array **14,** a front-face side optical film **22** provided on the viewer's side of the liquid crystal display panel **12** (the upper side in FIG. **1(b)****),** and a rear-face side optical film **23** provided on the light-incident side of the microlens array **14.** The front-face side optical film **22** and the rear-face side optical film **23** each include at least a polarization film which transmits linearly polarized light.

The microlens array **14** is provided in a displaying region **10,** which is a region where pixels are formed, and is not formed in a peripheral region **35** between the displaying region **10** ad the support **26.** Although the microlenses **14a** of the microlens array **14** are provided so as to correspond to the respective pixels in the present embodiment, the microlens array **14** may be composed of lenticular lenses each covering a plurality of pixels. As will be described later, the support **26** is preferably made of the same material as that of the microlenses **14a,** whereby the production steps can be simplified.

The liquid crystal display panel **12** includes an electrical element substrate **30** on which switching elements (e.g. TFTs or MIM devices) are provided for the respective pixels, a counter substrate **32** which is e.g. a color filter substrate (CF substrate), and a liquid crystal layer **34.** The liquid crystal layer **34** includes a liquid crystal material which is filled between the electrical element substrate **30** and the counter substrate **32,** and is sealed by a sealant **36** that is provided in the outer periphery.

The front-face side optical film **22** is attached to the liquid crystal display panel **12** via the adhesion layer **24,** and the rear-face side optical film **23** is attached to the support **26** and the respective apex portions of the microlenses **14a** via the adhesion layer **37.** The adhesion layer **37** and the microlens array **14** are formed so that the adhesion layer **37** is only in contact with the neighborhood of the apices of the microlenses **14a,** such that a gap **15** which is filled with air is formed between the periphery (the portion other than the apex portion) of each microlens **14a** and the adhesion layer **37** and in the peripheral region **35.**

As shown in FIG. **1(a)****,** in the support **26,** vent holes **16** in crank shape are formed for connecting the gaps **15** to the space outside the liquid crystal display panel **12.** As will be described later, the vent holes **16** are formed according to the aperture shape of the photomask when the support **26** is formed in a photolithography step.

The width of each vent hole **16** (the width of a cross section of the vent hole **16** along a plane which is perpendicular to the direction the vent hole **16** extends) is 250 µm. Preferably, the width of each vent hole **16** is no less than 25 µm and no more than 500 µm. If the width is smaller than 25 µm, changes in external temperature or humidity will become less likely to be propagated the gaps **15** and their neighboring component parts via the vent holes **16,** so that condensation will be likely to occur inside the liquid crystal display panel **100A,** thus causing problems such as display unevenness. A problem is also likely to occur in that the vent holes **16** may be occluded by such condensation or foreign matter which intrudes from outside, thus hindering the function of the vent holes **16.** On the other hand, if the width is greater than 500 µm, the contact area between the rear-face side optical film **23** and the support **26** will be small, so that distortion or flexing of the rear-face side optical film **23** will be likely to occur. A problem will also exist in that the adhesion substance of the adhesion layer **37** is likely to occlude the vent holes **16.**

For simplicity, FIG. **1(a)** illustrates the vent holes **16** as being positioned so that two vent holes **16** are formed along the two respective longer sides of the liquid crystal display panel **12,** and that one vent hole **16** is formed along each shorter side. However, in an actual embodiment, the vent holes **16** are to be uniformly located at an interval of 10 mm along the direction the support **26** extends. Note that, even if one vent hole **16** is provided for one liquid crystal display panel, or if one vent hole **16** is provided in each side of the liquid crystal display panel **12,** the effects of providing the vent holes **16** can be obtained. However, if the number of vent holes **16** is too large, the adhesion area between the rear-face side optical film **23** and the support **26** will be small, thus inducing problems such as deformation and peeling of the rear-face side optical film **23.** Therefore, it is preferable that the vent holes **16** are provided at an interval of 1 mm or more.

In the present embodiment, the width of the peripheral region **35** between the end of the microlens array **14** and the support **26** (width along a direction which is perpendicular to the direction the support **26** extends) is set to 80 µm. If the width of the peripheral region **35** is greater than 200 µm, as shown in FIG. **2****,** flexing is likely to occur in the peripheral region **35** of the rear-face side optical film **23.** When flexing occurs, display unevenness will occur near the periphery of the displaying region **10.** Therefore, the width of the peripheral region **35** is preferably 200 µm or less. On the other hand, if this width is smaller than 50 µm, there will be less than a sufficient margin for misalignment when forming the microlens array **14** and the support **26.** Therefore, the width of the peripheral region **35** is preferably 50 µm or more. The most preferable width of the peripheral region **35** is no less than 50 µm and no more than 100 µm.

According to the present embodiment, the vent holes **16** alleviate the temperature difference and humidity difference between the inside and the outside of the device when producing the liquid crystal display panel **100A** (particularly in the step of attaching the rear-face side optical film **23** through autoclaving) or after production, thus reducing the influences on the component parts due to expansion and shrinkage of the component parts and expansion and shrinkage of the air within the gaps **15.** As a result, distortion, warp, deformation, peeling, and the like of the optical film are effectively prevented.

Moreover, when the shape and positioning of the vent holes **16** according to the present embodiment are adopted, portions with weak attachment strength will not localize in any portion of the support, whereby distortion, warp, deformation, peeling, and the like of the optical film are more effectively prevented. Moreover, mixing of foreign matter into the displaying region **10** and condensation inside the displaying region **10** are prevented, thus making it possible to provide a high-quality liquid crystal display panel with little display unevenness.

In particular, since the vent holes **16** are formed in crank shape, as compared to the case where the vent holes are simply formed perpendicularly to the direction the support **26** extends, the vent holes **16** have a longer distance, and an increased resistance is provided for the air flow inside the vent holes **16.** As a result, abrupt flowing in and out of air between the gaps **15** and the external space can be prevented, and mixing of foreign matter into the displaying region **10** and condensation inside the displaying region **10** are effectively prevented. Moreover, since the vent holes **16** do not extend in one line along a direction perpendicular to the inner face of the support **26,** regions lacking the support **26** are not localized in one portion, whereby the adhesion strength between the support **26** and the rear-face side optical film **23** can be maintained high.

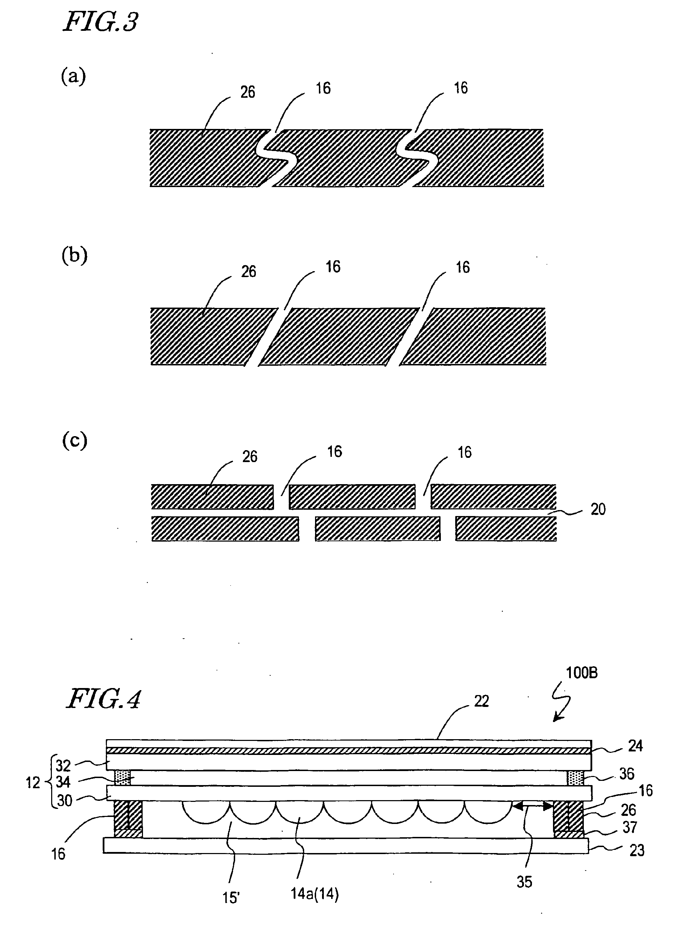

Next, with reference to FIG. **3****,** variants of the vent holes **16** will be described. Herein, only two vent holes **16** and the support **26** in their neighborhood are illustrated, while the other portions of the liquid crystal display panel **12** are omitted from illustration.

FIG. **3(a)** shows a first variant of the vent holes **16.** As shown in the figure, the vent holes **16** of the first variant extend in an S-shape, thus differing from the vent holes **16** of the above-described embodiment. However, their size and positioning, as well as the resultant effects and the like, are essentially the same as those in the above-described embodiment.

FIG. **3(b)** shows a second variant of the vent holes **16.** As shown in the figure, the vent holes **16** of the second variant extend in a linear shape along an oblique direction with respect to the inner face and the outer face (side faces of the liquid crystal display panel **100A)** of the support **26.** The size and positioning of the vent holes **16,** as well as the resultant effects and the like are also essentially the same as those of the above-described embodiment.

FIG. **3(c)** shows a third variant of the vent holes **16.** As shown in the figure, in addition to the aforementioned crank-shape vent holes, the vent holes **16** of the third variant include an auxiliary hole **20** formed so as to extend in parallel to the support **26** (i.e., vent holes in crank-shape plus inner-moat shape). The auxiliary hole **20** is a gap that is formed between an inner portion (first portion) of the support **26** which is formed so as to surround the microlens array **14** and an outer portion (second portion) of the support **26** which is formed so as to surround the inner portion. According to the vent holes **16** of the third variant, the auxiliary hole **20** further reduces the abrupt flowing in and out of air, thereby more effectively preventing mixing of foreign matter into the displaying region **10** and condensation inside the displaying region **10.**

Next, with reference to FIG. **4****,** a variant liquid crystal display panel **100B** with a microlens array according to the present embodiment will be described. Among the constituent elements of this variant, those which are identical to the constituent elements in the embodiment shown in FIG. **1** are denoted with like reference numerals, and the descriptions thereof are omitted.

In the liquid crystal display panel **100A** shown in FIG. **1****,** the rear-face side optical film **23** is attached to the liquid crystal display panel **12** via the neighborhood of the apices of the microlenses **14a** and the support **26.** In the variant liquid crystal display panel **100B** with a microlens array (which hereinafter may simply be referred to as "liquid crystal display panel **100B"),** as shown in FIG. **4****,** the rear-face side optical film **23** is attached to the liquid crystal display panel **12** only via the support **26.** Therefore, a gap **15'** is created between the microlens array **14** and the rear-face side optical film **23** across the entire interior of the support **26.** Note that, in this case, the adhesion layer **37** is to be formed only in the neighborhood of the rear-face side optical film **23** (only in the portion opposing the support **26).** Otherwise, the construction is the same as that of the liquid crystal display panel **100A.**

The liquid crystal display panel **100B** shown in FIG. **4** has a slightly inferior withstanding pressure than does the liquid crystal display panel **100A** shown in FIG. **1****,** but the rear-face side optical film **23** or the adhesion layer **37** is not in contact with the microlenses **14a.** Therefore, the microlenses **14a** will not be deformed even if the liquid crystal display panel **12** is depressed, thus preventing the brightness unevenness that may be caused by deformation of the microlenses **14a.** The effects which are obtained due to the presence of the vent holes **16** are the same as those obtained with the liquid crystal display panel **100A.**

The liquid crystal display panel **100** with a microlens array according to the present invention is suitably applied to a liquid crystal display panel having a pixel pitch of 50 µm to 250 µm, and in particular to a liquid crystal display panel with a pixel pitch of 200 µm or less. The diameter of each microlens (a width along a direction in which its lens function is exhibited) is set substantially equal to the pixel pitch. The height of each microlens is about 10 µm to 35 µm, and is to be determined in accordance with the microlens diameter and the pixel pitch.

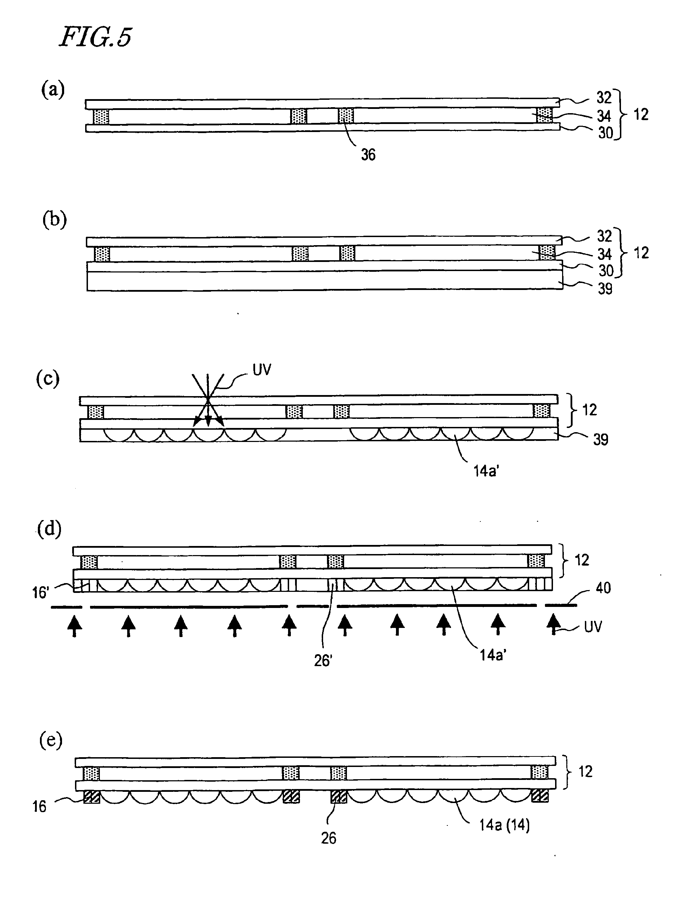

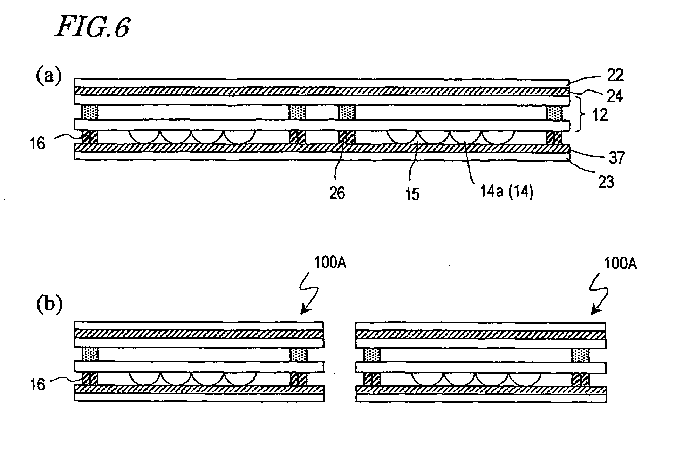

Next, with reference to FIGS. **5(a)** to **(e)** and FIGS. **6 (a)** and **(b)****,** a preferable production method for a liquid crystal display panel with a microlens array according to the present invention will be described. Herein, FIGS. **5(a)** to **(e)** and FIG. **6(a)** show steps by which a plurality of liquid crystal display panels **100A** shown FIG. **1** are formed simultaneously on a single mother substrate, whereas FIG. **6(b)** shows steps by which the plurality of liquid crystal display panels **100A** formed on the mother substrate are cut apart to become a plurality of liquid crystal display panels **100A** which are independent from one another. Therefore, in FIGS. **5(a)** to **(e)** and FIG. **6(a)****,** the constituent elements of the plurality of liquid crystal display panels **100A,** e.g., the electrical element substrates **30,** the counter substrates **32,** the optical films **22** and **23,** and the like, are each shown as one continuous layer.

First, as shown in FIG. **5(a)****,** a liquid crystal display panel **12** having a plurality of pixels in a matrix arrangement is provided. The liquid crystal display panel **12** includes an electrical element substrate **30** such as a TFT substrate, a counter substrate **32** such as a color filter substrate, and a liquid crystal layer **34** containing a liquid crystal material. The liquid crystal layer **34** is formed by using a liquid crystal dropping method, and is sealed between the electrical element substrate **30** and the counter substrate **32** with a sealant **36.**

Although a liquid crystal injection method could be adopted for the formation of the liquid crystal layer **34,** use of the liquid crystal dropping method will make it easy to simultaneously form a plurality of liquid crystal display panels on a mother substrate within a short period of time.

Next, as shown in FIG. **5(b)****,** a dry film (dry film resist) is attached on one of the principal faces of the liquid crystal display panel **12,** thereby forming a resin layer **39.** A photocurable resin is used as the material of the resin layer **39.** Although it is preferable to use a UV-curable resin having a high transmittance for the dry film (resin layer **39),** a photocurable resin, a thermosetting resin, or a photocurable-thermosetting type resin can otherwise be used. In a subsequent step, microlenses **14a** are formed by processing the resin layer **39.** In order to realize a thin liquid crystal display device, it is desirable to make the thickness of the resin layer **39** as thin as possible, so long as a convergence effect is obtained with the microlenses.

Next, as shown in FIGS. **5(c)** to **(e)****,** a microlens array **14** having the plurality of microlenses **14a** and a support **26** are formed by processing the resin layer **39.** Preferably, formation of the microlenses **14a** is performed by a method in self-aligning fashion (self alignment method) as described in Patent Document 3. According to this method, microlenses **14a** corresponding to the pixels can be easily formed with no misalignment of optical axes, whereby a high convergence effect can be obtained.

Based on this method, in the step shown in FIG. **5(c)****,** the resin layer **39** of UV curable resin is irradiated with UV light through the liquid crystal display panel **12.** During the UV light irradiation, the substrate or the UV light source is moved so as to change the incident angle of the irradiation light to the liquid crystal display panel **12** in a stepwise or gradual manner. As a result, the irradiation intensity of the irradiation light on the resin layer **39** is locally changed, whereby latent images **14a'** of microlenses **14a** corresponding to the respective pixels are formed.

Thereafter, as shown in FIG. **5(d)****,** the resin layer **39** is exposed to light from the opposite side of the liquid crystal display panel **12** through a photomask **40,** thereby forming a latent image **26'** of the support **26** and latent images **16'** of the vent holes **16** in a peripheral region of the microlens array **14.**

By performing a development step after this exposure step, as shown in FIG. **5(e)****,** the microlens array **14** having the plurality of microlenses **14a** is formed, and also the support **26** having the vent holes **16** is formed in the peripheral region of the microlens array **14.** Since the heights of the support **26** and the microlenses **14a** can be defined by the thickness of the resin layer **39,** a resin layer **39** having a highly uniform thickness can be obtained by using a dry film for the resin layer **39,** whereby the heights of the support **26** and the microlenses **14a** (maximum height) can be precisely controlled to the same height.

Thereafter, as shown in FIG. **6(a)****,** the rear-face side optical film **23** is attached to the support **26** and the apex portions of the microlens array **14** via an adhesion layer **37,** and the front-face side optical film **22** is attached to the liquid crystal display panel **12** via an adhesion layer **24.** Note that the front-face side optical film **22** can be attached to the liquid crystal display panel **12** at any arbitrary point in the aforementioned steps.

Finally, as shown in FIG. **6(b)****,** by using a method described in Japanese Laid-Open Patent Publication No. 2004-4636, for example, the multilayer substrate shown in FIG. **6(a)** is cut, whereby a plurality of liquid crystal display panels **100A** with microlens arrays are completed.

In the steps in FIGS. **5(c)** to **(e)** above, the microlens array **14** and the like can be formed by a method such as a transfer technique, for example. In the case of using a transfer technique, a stamper is pressed against the resin layer **39** to transfer a template of the stamper, whereby the microlens array **14,** the support **26,** and the vent holes **16** are formed. As a result, a liquid crystal display panel having a similar structure to that which is shown in FIG. **5(e)** is obtained.

Note that, in the case of producing the variant liquid crystal display panel **100B** shown in FIG. **4****,** the resin layer **39** may be exposed to light so that the thickness of the apex portions of the latent images **14a'** of the microlenses is thinner than the thickness of the resin layer **39,** by adjusting the irradiation light in the aforementioned exposure step of FIG. **5(c)****.**

Next, the shape of the microlenses **14a** to be formed in the aforementioned steps will be described.

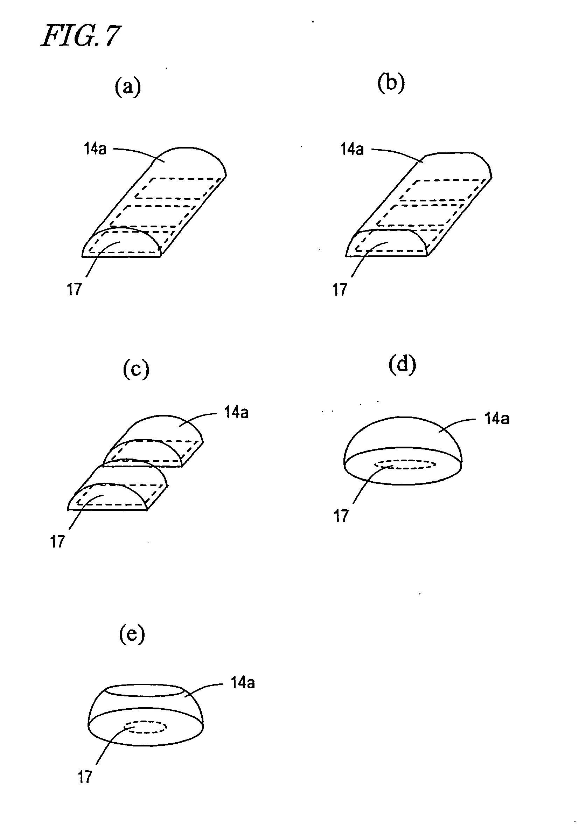

FIG. **7** is diagrams schematically exemplifying shapes of the microlenses **14a** to be formed in the steps shown in FIGS. **5(c)** to **(e)****.** In these steps, by adjusting the distribution of irradiation light amount for the resin layer **39,** lenticular lenses each encompassing a plurality of pixel apertures **17** can be formed as shown in FIGS. **7(a)** and **(b)****,** or microlens corresponding to the respective pixel apertures **17** can be formed as shown in FIGS. **7(c)** to **(e)****.** The lens shown in FIG. **7(a)** is a semicolumnar lenticular lens; and the lens shown in FIG. **7(b)** is a lenticular lens having a flat portion in the neighborhood of its apex. The lenses shown in FIG. **7(c)** are semicolumnar microlenses which are formed for the respective pixels; the lens shown in FIG. **7(d)** is a hemispherical microlens which is formed for each pixel; and the lens shown in FIG. **7(e)** is a hemispherical microlens whose apex portion is planarized.

In the above-described production method, the microlens array **14** is formed by exposing the resin layer **39** to light. However, the microlens array **14** and the support **26** may be integrally formed on the surface of a glass substrate of a liquid crystal display panel, as is described in USP No. 6989874, for example. A liquid crystal display panel with a microlens array which is formed with such a method is also encompassed within the scope of the present invention.

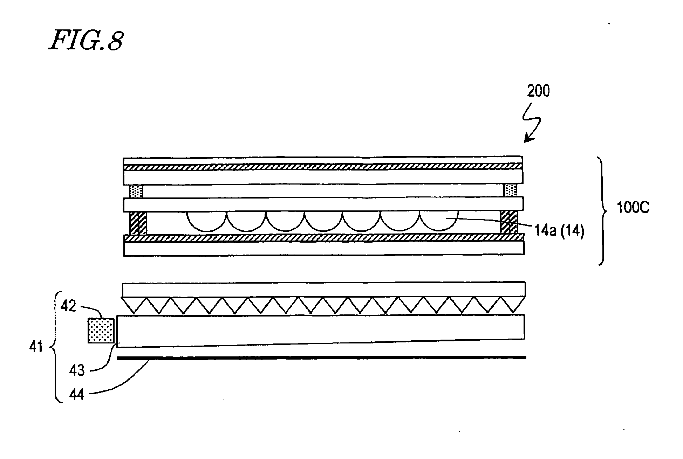

FIG. **8** schematically shows the construction of a liquid crystal display device **200** having a liquid crystal display panel **100C** according to an embodiment of the present invention. The liquid crystal display panel **100C** corresponds to the liquid crystal display panels **100A** and **100B** with a microlens array of the present embodiment.

The liquid crystal display device **200** includes the liquid crystal display panel **100C** and a backlight **41** having high directivity. The backlight **41** includes a light source **42,** a light guide plate **43** for receiving light emitted from the light source **42** and allowing it to propagate therethrough and be emitted toward the liquid crystal display panel **100C,** and a reflector **44** for causing the light which is emitted from the rear face of the light guide plate **43** or light which is incident from outside of the liquid crystal display device 200 and transmitted through the liquid crystal display panel 100C and the light guide plate **43** to be reflected toward the light guide plate **43.**

The backlight **41** emits light that has a low directivity along the direction in which LEDs used as the light source **42** are arranged and a high directivity along a direction which is orthogonal thereto. Note that directivity is an index indicating a degree of divergence of light from the backlight **41** (degree of parallelism), and usually an angle which results in a brightness that is half of the brightness in the frontal direction is defined as a half-directivity angle. Therefore, as this half-directivity angle becomes smaller, the backlight has more of a peak (having a high directivity) in the frontal direction.

. As the backlight **41** suitable for use in the liquid crystal display device **200,** for example, backlights which are described in IDW'02 "Viewing Angle Control using Optical Microstructures on Light-Guide Plate for Illumination System of Mobile Transmissive LCD Module", K.KALANTAR, p549-552, IDW'04 "Prism-sheetless High Bright Backlight System for Mobile Phone" A. Funamoto et al. p.687-690, Japanese Laid-Open Patent Publication No. 2003-35824, Japanese National Phase PCT Laid-Open Publication No. 8-511129, and the like are applicable.

By providing the microlens array **14,** light which illuminates areas other than the pixels (apertures), i.e., light which is emitted from the backlight **41** toward a light-shielding film BM that is formed around the pixels, is guided by the microlenses **14a** to the pixels and emitted from the liquid crystal display panel **100C.** As a result, the efficiency of light utility of the backlight **41** is improved.

In order to obtain a high efficiency of light utility in a display panel having microlenses, such as the liquid crystal display panel **100C,** it is preferable that the backlight **41** has a high directivity. In other words, it is preferable that the half-directivity angle of light emitted from the backlight **41** is small.

On the other hand, as for the pixels, a higher efficiency of light utility can be obtained as their apertures become larger. However, in a transflective-type liquid crystal display panel, its characteristics as a reflection type are also important, and only a portion of each pixel (transmission region) is used for transmission displaying; therefore, there is a limitation to the aperture ratio (area ratio of the transmission region). In many cases, the aperture ratio in a transflective-type liquid crystal display panel is 20 to 60%. Thus, the present invention is suitably used for a liquid crystal display panel having a low aperture ratio, such as a transflective-type liquid crystal display panel.

The vent holes **16** in the above-described embodiment and variants are of the configurations shown in FIG. **1(a)** and FIGS. **3(a)** to **(c)**, but the configurations of the vent holes **16** are not limited thereto. For example, they may have a shape such that each vent hole becomes thinner (or thicker) in a part thereof, a shape such that the length of the bent portion (length along the direction the support extends) is even longer, a shape such that a portion of a crank shape extends obliquely, and so on. Otherwise, any vent hole that provides the above-described effect when adopted is encompassed by the vent holes according to the present invention.

According to the present invention, in a liquid crystal display device having an air layer which is formed between a microlens array and an optical film, vent holes are provided which are bent or extend in an oblique direction, whereby distortion, warp, deformation, peeling, and the like of the optical film during the production process of the liquid crystal display device are prevented. Moreover, portions with weak attachment strength do not localize in any portion of a support, whereby distortion, warp, deformation, peeling, and the like of the optical film are further prevented. Moreover, condensation and mixing of foreign matter, which might occur during the production or use of the liquid crystal display device, are also prevented, whereby occurrence of display unevenness is prevented.

Therefore, according to the present invention, there is provided a liquid crystal display panel with microlenses as well as a liquid crystal display device having a high strength, a high efficiency of light utility, and a high displaying quality across the entire display surface. Moreover, according to the present invention, such a liquid crystal display panel and liquid crystal display device can be produced efficiently.

### INDUSTRIAL APPLICABILITY

The present invention improves the strength and displaying quality of a liquid crystal display panel and a liquid crystal display device, and particularly improves the quality of a liquid crystal display panel and a liquid crystal display device which have a relatively small aperture ratio, such as a transflective-type liquid crystal display panel.

## Claims

1. A liquid crystal display device (100A, 100B, 100C), comprising:
a liquid crystal display panel (12) haying a plurality of pixels; ,
a microlens array (14) provided on one major surface of the liquid crystal display panel (12);
a support (26) provided on the major surface of the liquid crystal display panel (12) so as to surround the microlens array (14);
an optical film (23) attached to the liquid crystal display panel (12) via the support (26); and
a gap (15) formed between the microlens array (14) and the optical film (23),
**characterised in that**
at least one vent hole (16), connecting a space outside the support (26) and the gap (15), is provided in the support (26); and
the vent hole (16) extends in a bending manner or extends straight but in an oblique direction with respect to an inner face of the support (26).

2. The liquid crystal display device (100A, 100B, 100C) of claim 1, wherein a shape of the vent hole (16) as seen from the direction perpendicular to the plane of the liquid crystal display panel (12) is a crank shape or an S-shape.

3. The liquid crystal display device (100A, 100B. 100C) of claim 1 or 2. wherein a cross-sectional width of the vent hole (16) in a plane which is perpendicular to the direction towards which the vent hole (16) extends is no less than 25 [micro]m and no lar to the direction towards which the vent hole (16) extends is no less than 25 [micro]m and no more than 500 [micro]m.

4. The liquid crystal display device (100A, 100B, 100C) of any one of claims 1 to 3, wherein, the support (26) includes a first portion formed so as to surround the microlens array (14) and a second portion provided so as to surround the first portion; and a gap (20) which is in communication with the vent hole (16) is formed between the first portion and the second portion.

5. The liquid crystal display device (100A, 100B, 100C) of any of one of claims 1 to 4, wherein a plurality of vent holes (16) are formed in different positions of the support (26).

6. The liquid crystal display device (100A, 100B, 100C) of claim 5, wherein the plurality of vent holes (16) are formed in different positions of the support (26) at an equal interval.

7. The liquid crystal display device (100A, 100B, 100C) of claim 5. wherein the plurality of vent holes (16) are formed in different positions of the support (26) with an interval of 1 mm or more.

8. The liquid crystal display device (100A, 100B, 100C) of any one of claims 1 to 7, wherein the support (26) is formed at a predetermined distance from an end of the microlens array (14).

9. The liquid crystal display device (100A, 100B, 100C) of claim 8, wherein the predetermined distance is 200 [micro]m or less.

10. The liquid crystal display device (100A, 100B, 100C) of claim 8, wherein the predetermined distance is no less than 50 [micro]m and no more than 100 [micro]m.

11. A liquid crystal display device (200) comprising the liquid crystal display device (100A, 100B, 100C) of any one of claims 1 to 10 and a backlight (41).

12. A production method for a liquid crystal display device (100A, 100B, 100C), the liquid crystal display device (100A, 100B, 100C) having a liquid crystal display panel (12), a microlens array (14) provided on one major surface of the liquid crystal display panel (12), and an optical film (23) provided on the microlens array (14), with a gap (15) between the microlens array (14) and the optical film (23), comprising:
(a) a step of forming a resin layer (39) on a face of the liquid crystal display panel (12);
(b) a step of processing the resin layer (39) to form a microlens array (14);
(c) a step of processing the resin layer (39) to form a support (26) so as to surround the microlens array (14); and
(d) a step of attaching an optical film (23) to the support (26),
**characterised in that**
in step (c), at least one vent hole (16) connecting a space inside the support (26) and a space outside the support (26) is formed in the support (26), so as to extend in a bending manner or extend straight but in an oblique direction with respect to an inner face of the support (26).

13. The production method of claim 12, wherein the vent hole (16) is formed in a crank shape or an S-shape as seen from the direction which is perpendicular to the plane of the liquid crystal display panel (12).

14. The production method of claim 12 or 13, wherein step (c) comprises a step of forming a first portion of the support (26) so as to surround the microlens array (14) and a step of forming a second portion of the support (26) so as to surround the first portion, with a gap (20) in communication with the vent hole (16) being formed between the first portion and the second portion.

15. The production method of any one of claims 12 to 14, wherein, in step (c), a plurality of vent holes (16) are formed in different positions of the support (26).

16. The production method of claim 15. wherein, in step (c), a plurality of vent holes (16) are formed in different positions of the support (26) at an equal interval.

## Patentansprüche

1. Flüssigkristallanzeigevorrichtung (100A, 100B, 100C), mit:
einer Flüssigkristallanzeigetafel (12), die mehrere Pixel besitzt;
einer Mikrolinsenanordnung (14), die auf einer Hauptoberfläche der Flüssigkristallanzeigetafel (12) vorgesehen ist;
einem Träger (26), der auf der Hauptoberfläche der Flüssigkristallanzeigetafel (12) so vorgesehen ist, dass er die Mikrolinsenanordnung (14) umgibt;
einer dünnen optischen Schicht (23), die an der Flüssigkristallanzeigetafel (12) über den Träger (26) befestigt ist; und
einem Spalt (15), der zwischen der Mikrolinsenanordnung (14) und der dünnen optischen Schicht (23) ausgebildet ist,
**dadurch gekennzeichnet, dass**
im Träger (26) wenigstens ein Loch (16) vorgesehen ist, das einen Raum außerhalb des Trägers (26) mit dem Spalt (14) verbindet; und
das Loch (16) gebogen oder geradlinig, jedoch in einer schrägen Richtung in Bezug auf eine Innenfläche des Trägers (26), verläuft.

2. Flüssigkristallanzeigevorrichtung (100A, 100B, 100C) nach Anspruch 1, wobei eine Form des Lochs (16) bei Betrachtung aus der Richtung senkrecht zu der Ebene der Flüssigkristallanzeigetafel (16) eine Kurbelform oder eine S-Form ist.

3. Flüssigkristallanzeigevorrichtung (100A, 100B, 100C) nach Anspruch 1 oder 2, wobei eine Querschnittsbreite des Lochs (16) in einer Ebene, die zu der Richtung, in der sich das Loch (16) erstreckt, senkrecht ist, nicht weniger als 25 µm und nicht mehr als 500 µm beträgt.

4. Flüssigkristallanzeigevorrichtung (100A, 100B, 100C) nach einem der Ansprüche 1 bis 3, wobei der Träger (26) einen ersten Abschnitt, der so geformt ist, dass er die Mikrolinsenanordnung (14) umgibt, und einen zweiten Abschnitt, der so vorgesehen ist, dass er den ersten Abschnitt umgibt, enthält; und zwischen dem ersten Abschnitt und dem zweiten Abschnitt ein Spalt (20) ausgebildet ist, der mit dem Loch (16) kommuniziert.

5. Flüssigkristallanzeigevorrichtung (100A, 100B, 100C) nach einem der Ansprüche 1 bis 4, wobei die mehreren Löcher (16) an verschiedenen Positionen des Trägers (26) ausgebildet sind.

6. Flüssigkristallanzeigevorrichtung (100A, 100B, 100C) nach Anspruch 5, wobei die mehreren Löcher (16) an verschiedenen Positionen des Trägers (26) in einem gleichen Intervall ausgebildet sind.

7. Flüssigkristallanzeigevorrichtung (100A, 100B, 100C) nach Anspruch 5, wobei die mehreren Löcher (16) an verschiedenen Positionen des Trägers (26) mit einem Intervall von 1 mm oder mehr ausgebildet sind.

8. Flüssigkristallanzeigevorrichtung (100A, 100B, 100C) nach einem der Ansprüche 1 bis 7, wobei der Träger (26) in einem vorgegebenen Abstand von einem Ende der Mikrolinsenanordnung (14) ausgebildet ist.

9. Flüssigkristallanzeigevorrichtung (100A, 100B, 100C) nach Anspruch 8, wobei die vorgegebene Strecke 200 µm oder weniger beträgt.

10. Flüssigkristallanzeigevorrichtung (100A, 100B, 100C) nach Anspruch 8, wobei die vorgegebene Strecke nicht weniger als 50 µm und nicht mehr als 100 µm beträgt.

11. Flüssigkristallanzeigevorrichtung (200), die die Flüssigkristallanzeigevorrichtung (100A, 100B, 100C) nach einem der Ansprüche 1 bis 10 und eine Hintergrundbeleuchtung (41) enthält.

12. Herstellungsverfahren für eine Flüssigkristallanzeigevorrichtung (100A, 100B, 100C), wobei die Flüssigkristallanzeigevorrichtung (100A, 100B, 100C) eine Flüssigkristallanzeigetafel (12), eine Mikrolinsenanordnung (14), die auf einer Hauptoberfläche der Flüssigkristallanzeigetafel (12) vorgesehen ist, und eine dünne optische Schicht (23), die auf der Mikrolinsenanordnung (14) vorgesehen ist, enthält, wobei zwischen der Mikrolinsenanordnung (14) und der dünnen optischen Schicht (23) ein Spalt (15) vorhanden ist, das enthält:
(a) einen Schritt zum Bilden einer Harzschicht (39) auf einer Fläche der Flüssigkristallanzeigetafel (12);
(b) einen Schritt zum Verarbeiten der Harzschicht (39), um eine Mikrolinsenanordnung (14) zu bilden;
(c) einen Schritt zum Verarbeiten der Harzschicht (39), um einen Träger (26) zu bilden, um die Mikrolinsenanordnung (14) zu umgeben; und
(d) einen Schritt zum Befestigen einer dünnen optischen Schicht (23) an dem Träger (26),
**dadurch gekennzeichnet, dass**
im Schritt (c) wenigstens ein Loch (16), das einen Raum innerhalb des Trägers (26) mit einem Raum außerhalb des Trägers (26) verbindet, im Träger (26) ausgebildet wird, so dass es gebogen oder geradlinig, jedoch in einer schrägen Richtung in Bezug auf eine innere Fläche des Trägers (26), verläuft.

13. Herstellungsverfahren nach Anspruch 12, wobei das Loch (16) bei Betrachtung in der Richtung, die zu der Ebene der Flüssigkristallanzeigetafel (12) senkrecht ist, in einer Kurbelform oder einer S-Form gebildet wird.

14. Herstellungsverfahren nach Anspruch 12 oder 13, wobei der Schritt (c) einen Schritt des Bildens eines ersten Abschnitts des Trägers (26), um die Mikrolinsenanordnung (14) zu umgeben, und einen Schritt des Bildens eines zweiten Abschnitts des Trägers (26), um den ersten Abschnitt zu umgeben, enthält, wobei zwischen dem ersten Abschnitt und dem zweiten Abschnitt ein Spalt (20) gebildet wird, der mit dem Loch (16) kommuniziert.

15. Herstellungsverfahren nach einem der Ansprüche 12 bis 14, wobei im Schritt (c) mehrere Löcher (16) an verschiedenen Positionen des Trägers (26) gebildet werden.

16. Herstellungsverfahren nach Anspruch 15, wobei im Schritt (c) mehrere Löcher (16) an verschiedenen Positionen des Trägers (26) in einem gleichen Intervall gebildet werden.

## Revendications

1. Dispositif d'affichage à cristaux liquides (100A, 100B, 100C), comprenant :
un écran d'affichage à cristaux liquides (12) ayant plusieurs pixels ;
un groupement de microlentilles (14) disposé sur une surface principale de l'écran d'affichage à cristaux liquides (12) ;
un support (26) disposé sur la surface principale de l'écran d'affichage à cristaux liquides (12) afin d'entourer le groupement de microlentilles (14) ;
un film optique (23) attaché à l'écran d'affichage à cristaux liquides (12) par l'intermédiaire du support (26) ; et
un espacement (15) formé entre le groupement de microlentilles (14) et le film optique (23),
**caractérisé en ce que**
au moins un évent (16), reliant un espace à l'extérieur du support (26) et l'espacement (15), est prévu dans le support (26) ; et
l'évent (16) s'étend en étant courbé ou en étant droit, mais dans une direction oblique par rapport à une face intérieure du support (26).

2. Dispositif d'affichage à cristaux liquides (100A, 100B, 100C) selon la revendication 1, dans lequel l'évent (16), lorsque vu à partir de la direction perpendiculaire au plan de l'écran d'affichage à cristaux liquides (12), présente est une forme de manivelle ou une forme de S.

3. Dispositif d'affichage à cristaux liquides (100A, 100B, 100C) selon la revendication 1 ou 2, dans lequel une largeur en coupe transversale de l'évent (16), dans un plan qui est perpendiculaire à la direction vers laquelle l'évent (16) s'étend, n'est pas inférieure à 25 µm et pas supérieure à 500 µm.

4. Dispositif d'affichage à cristaux liquides (100A, 100B, 100C) selon l'une quelconque des revendications 1 à 3, dans lequel le support (26) inclut une première partie formée de façon à entourer le groupement de microlentilles (14) et une seconde partie disposée de façon à entourer la première partie ; et un espacement (20) qui est en communication avec l'évent (16) est formé entre la première partie et la seconde partie.

5. Dispositif d'affichage à cristaux liquides (100A, 100B, 100C) selon l'une quelconque des revendications 1 à 4, dans lequel plusieurs évents (16) sont formés dans des positions différentes du support (26).

6. Dispositif d'affichage à cristaux liquides (100A, 100B, 100C) selon la revendication 5, dans lequel les évents (16) sont formés dans des positions différentes du support (26) à un intervalle égal.

7. Dispositif d'affichage à cristaux liquides (100A, 100B, 100C) selon la revendication 5, dans lequel les évents (16) sont formés dans des positions différentes du support (26), avec un intervalle de 1 mm ou plus.

8. Dispositif d'affichage à cristaux liquides (100A, 100B, 100C) selon l'une quelconque des revendications 1 à 7, dans lequel le support (26) est formé à une distance prédéterminée d'une extrémité du groupement de microlentilles (14).

9. Dispositif d'affichage à cristaux liquides (100A, 100B, 100C) selon la revendication 8, dans lequel la distance prédéterminée est de 200 µm ou moins.

10. Dispositif d'affichage à cristaux liquides (100A, 100B, 100C) selon la revendication 8, dans lequel la distance prédéterminée n'est pas inférieure à 50 µm et pas supérieure à 100 µm.

11. Dispositif d'affichage à cristaux liquides (200) comprenant le dispositif d'affichage à cristaux liquides (100A, 100B, 100C) selon l'une quelconque des revendications 1 à 10 et un rétroéclairage (41).

12. Procédé de production pour un dispositif d'affichage à cristaux liquides (100A, 100B, 100C), le dispositif d'affichage à cristaux liquides (100A, 100B, 100C) comportant ayant un écran d'affichage à cristaux liquides (12), un groupement de microlentilles (14) disposé sur une surface principale de l'écran d'affichage à cristaux liquides (12), et un film optique (23) disposé sur le groupement de microlentilles (14), avec un espacement (15) entre le groupement de microlentilles (14) et le film optique (23), comprenant :
(a) une étape de formation d'une couche de résine (39) sur une face de l'écran d'affichage à cristaux liquides (12) ;
(b) une étape de traitement de la couche de résine (39) pour former un groupement de microlentilles (14) ;
(c) une étape de traitement de la couche de résine (39) pour former un support (26) de façon à entourer le groupement de microlentilles (14) ; et
(d) une étape d'attachement d'un film optique (23) au support (26),
**caractérisé en ce que**
dans l'étape (c), au moins un évent (16), reliant un espace à l'intérieur du support (26) et un espace à l'extérieur du support (26), est formé dans le support (26), de façon à s'étendre en étant courbé ou droit, mais dans une direction oblique par rapport à une face intérieure du support (26).

13. Procédé de production selon la revendication 12, dans lequel l'évent (16) est formé en forme de manivelle ou en forme de S lorsque vu à partir de la direction qui est perpendiculaire au plan de l'écran d'affichage à cristaux liquides (12).

14. Procédé de production selon la revendication 12 ou 13, dans lequel l'étape (c) comprend une étape de formation d'une première partie du support (26) de façon à entourer le groupement de microlentilles (14) et une étape de formation d'une seconde partie du support (26) de façon à entourer la première partie, un espacement (20) en communication avec l'évent (16) étant formé entre la première partie et la seconde partie.

15. Procédé de production selon l'une quelconque des revendications 12 à 14, dans lequel, dans l'étape (c), plusieurs évents (16) sont formés dans des positions différentes du support (26).

16. Procédé de production selon la revendication 15, dans lequel, dans l'étape (c), plusieurs évents (16) sont formés dans des positions différentes du support (26) à un intervalle égal.
